# EUROPÄISCHE PATENTANMELDUNG

(11) **EP 3 842 218 A1**
(43) Veröffentlichungstag der Anmeldung: **30.06.2021**
(21) Anmeldenummer: 20208392.9
(22) Anmeldetag: 18.11.2020
(51) Int. Cl.: B29C 70/38, B29C 70/72, B29C 70/68

(54) **GEHÄUSEKOMPONENTE EINER BAUEINHEIT**

(30) Priorität: 23.12.2019 DE 102019220541
(71) Anmelder: Robert Bosch GmbH, 70442 Stuttgart (DE)
(72) Erfinder: Lindenthal, Konstantin, 87544 Blaichach (DE); Pawlak, Thomas, 87509 Immenstadt (DE); Herzog, Florian, 87541 Bad Hindelang (DE); Oetting, Claus-Christian, 87544 Blaichach (DE); Hoffmann, Sebastian, 87527 Sonthofen (DE); Ess, Lena, 88167 Gruenenbach (DE)

(57) **Zusammenfassung**

Die Erfindung bezieht sich auf eine Gehäusekomponente (12) einer Baueinheit, insbesondere eines Gehäuses (10) eines Getriebes (14) oder einer elektrischen Maschine (18) im elektrischen Antriebsstrang (20) eines Fahrzeugs. Die Gehäusekomponente (12) enthält mindestens eine integrierte Lageraufnahme (22), der mindestens ein Einlegeteil (24) zur mechanischen Fixierung zugeordnet ist, die lastpfadgerecht mit Verstärkungsfasern (28) und/oder Verstärkungsfasersträngen (52) umwickelt ist. Darüber hinaus bezieht sich die Erfindung auf ein Verfahren zur Herstellung einer Gehäusekomponente sowie auf die Verwendung der Gehäusekomponente an einer Baueinheit, insbesondere einem Gehäuse eines Getriebes oder einer elektrischen Maschine eines elektrisch angetriebenen Fahrzeugs.

## Beschreibung

### Technisches Gebiet

Die Erfindung bezieht sich auf eine Gehäusekomponente einer Baueinheit, insbesondere eines Gehäuses eines Getriebes oder einer elektrischen Maschine im elektrischen Antriebsstrang eines Fahrzeugs. Darüber hinaus bezieht sich die Erfindung auf ein Verfahren zur Herstellung einer Gehäusekomponente sowie auf deren Verwendung an einer Baueinheit, insbesondere einem Gehäuse eines Getriebes oder einer elektrischen Maschine eines elektrisch angetriebenen Fahrzeugs.

### Stand der Technik

DE 40 25 505 A1 hat ein Getriebegehäuse mit mehreren Lagern für Wellen zum Gegenstand. Das Gehäuse, welches mittels Kunststoff-Spritzgussverfahren hergestellt ist, umfasst mindestens teilweise Außenringe von Lagern, die von mindestens einem, in dem Kunststoffspritzgussgehäuse eingebetteten metallischen Präzisionseinlegeteil auf Achsabstandsmaß gehalten sind. Bei der Herstellung werden die Einlegeteile auf die beim Spritzguss verwendete Temperatur erwärmt und anschließend mit faserverstärktem Kunststoffmaterial umspritzt.

DE 10 2011 111 743 B4 offenbart ein faserverstärktes Kunststoffbauteil, welches zum Einsatz im Motorraum eines Fahrzeugs mit Verbrennungskraftmaschine bestimmt ist. Das Bauteil wird insbesondere als ein Steuergehäusemodul ausgeführt. Das Bauteil umfasst einen Textileinleger, dessen Ränder mit Verstärkungen versehen sein können. Hierzu kann beispielsweise ein faserverstärktes Kunststoffrohr verwendet werden, welches im Randbereich platziert wird und mit dem Textileinlegematerial umwickelt ist.

DE 10 2013 220 444 A1 hat ein Gehäuseelement für eine Getriebeantriebseinrichtung zum Gegenstand. Ein Getriebegehäuse wird aus einem Kunststoffmaterial gefertigt, insbesondere mit Glasfaseranteilen und ist mittels Kunststoffspritzgussverfahren hergestellt.

Ein elektrifizierter Antriebsstrang, wie er in Elektrofahrzeugen und Hybridfahrzeugen eingesetzt wird, muss eine möglichst hohe Leistungsdichte bei geringem Gewicht aufweisen. Das Gewicht ist insbesondere bei Elektrofahrzeugen maßgebend für die Dimensionierung der Batteriegröße und stellt somit einen Stellhebel für Kosten und Ressourcen dar. Beispielsweise ist innerhalb eines elektrifizierten Antriebsstrangs das Getriebe ein Funktionselement mit einem sehr hohen Gewicht, wobei beispielsweise ein Getriebedeckel, in der Regel aus Aluminiumdruckguss gefertigt, mehrere Kilogramm wiegen kann.

Aktuell werden Gehäuse für Komponenten, die innerhalb des elektrifizierten Antriebsstrangs verbaut werden, überwiegend aus Aluminiumdruckguss gefertigt. Hier seien als Beispiele Getriebe, elektrische Maschinen, Inverter und elektrifizierte Achsen genannt. Die Gehäuse stellen somit ein sehr großes Gewichtseinsparpotential dar. Aluminium hat im Vergleich zu anderen Werkstoffen eine relativ schlechte CO₂-Bilanz bedingt durch den Abbau und die energieintensiven Weiterverarbeitungstechniken.

Des Weiteren benötigen insbesondere mittels des Druckgussverfahrens gefertigte Aluminiumbauteile in der Regel Nacharbeiten, so zum Beispiel ein Entgraten sowie das nachträgliche Montieren von Funktionselementen, wie beispielsweise eine Ölstandsanzeige bei Getrieben, Magneten und Sensoren, was wiederum zusätzliche Kosten generiert. WO 2012 072166 A1 hat einen Getriebedeckel zum Gegenstand, wobei der Getriebedeckel als Gussteil gefertigt ist. WO 2010 052 059 A1 offenbart einen Antrieb für einen Scheibenwischer, in dem ein Getriebe integriert ist, wobei ein gemäß dieser Lösung verwendeter Getriebedeckel aus Kunststoffmaterial gefertigt ist.

### Darstellung der Erfindung

Erfindungsgemäß wird eine Gehäusekomponente einer Baueinheit vorgeschlagen, insbesondere eines Gehäuses eines Getriebes oder eines elektrischen Antriebs im elektrischen Antriebsstrang eines Fahrzeugs, wobei die Gehäusekomponente mindestens eine integrierte Lageraufnahme enthält, der mindestens ein Einlegeteil zur mechanischen Fixierung zugeordnet ist, die lastpfadgerecht mit Verstärkungsfasern und/oder Verstärkungsfasersträngen verbunden oder umwickelt ist. Durch diese Lösung kann unter erheblicher Gewichtseinsparung eine mechanische Stabilität einer Gehäusekomponente, welche beispielsweise mechanische Lasten bei einem Getriebe aufnehmen muss, dargestellt werden.

In Weiterbildung der erfindungsgemäß vorgeschlagenen Lösung umfasst die Gehäusekomponente, bei der es sich beispielsweise um einen Getriebedeckel oder dergleichen handeln kann, Verstärkungsfasern und/oder Verstärkungsfaserstränge, die aus Kohlenstofffasern, Glasfasern, Aramidfasern, Naturfasern, anorganischen Verstärkungsfasern (Kohlenstoff-, Glas-, Basalt-, Bor-, Keramik-, Quarz-, Kieselsäurefasern); metallischen Verstärkungsfasern, so zum Beispiel Stahlfasern; organischen Verstärkungsfasern (Aramid-, Polyester-, Nylon-, Polyethylen-, Polymethylmethacrylat-, PBO-Fasern; oder Naturfasern, so zum Beispiel Hanf-, Flachs-, Sisal-, Holzfasern gefertigt sind.

In vorteilhafter Weiterführung des erfindungsgemäßen Gedankens umfassen die Verstärkungsfasern und/oder die Verstärkungsfaserstränge Faserhalbzeuge, die insbesondere als Tapes, imprägnierte Tapes, Rovings oder imprägnierte Rovings ausgeführt sein können. Unter Rovings werden im vorliegenden Zusammenhang Stränge parallel liegender Filamente, auch als Endlosfasern bezeichnet, bezeichnet, die entweder zu einer Spule mit Außenabzug oder in einer stützfreien Packung mit Innenabzug aufgerollt sind. Die einzelnen Filamente sind nicht miteinander verflochten, sondern nur lose zusammen gebündelt. Die gängigsten für die Herstellung verwendeten Materialien sind Carbonfasern, Glasfasern, Aramidfasern und Basaltfasern.

Bei der erfindungsgemäß vorgeschlagenen Gehäusekomponente werden durch die lastpfadgerecht verlaufenden Verstärkungsfasern und/oder Verstärkungsfaserstränge Einlegeteile miteinander verbunden und dadurch eine Struktur zur Lastaufnahme gebildet, welche Zwischenräume aufweist. Bei den erfindungsgemäß vorgeschlagenen Gehäusekomponenten wird somit die mechanische Stabilität durch lastpfadgerecht angeordnete Verstärkungen geschaffen, wobei die Zwischenräume zur Material- und Gewichtsersparnis, falls nicht zur mechanischen Stabilität beitragend, zunächst freibleiben.

In vorteilhafter Weiterbildung der erfindungsgemäß vorgeschlagenen Lösung können die Zwischenräume mit einem Kunststoffmaterial, insbesondere einem Thermoplasten oder einem Duroplasten verfüllt werden. Dadurch lassen sich die Zwischenräume einerseits ausfüllen und somit die Gehäusekomponente abdichten, andererseits trägt die Verfüllung der Zwischenräume mit einem Kunststoffmaterial zur Gewichtsverminderung bei.

In vorteilhafter Weise werden als Kunststoffmaterialien Thermoplasten, wie zum Beispiel Polyamide, Polyethylen, Polypropylen, Polycarbonat, Polivinylchlorid eingesetzt. Alternativ kann die erfindungsgemäß vorgeschlagene Gehäusekomponente auch Duroplasten, wie beispielsweise Epoxidharz oder Phenolharz enthalten, mit welchem sich die Zwischenräume verfüllen lassen. Auch Polyurethane sind geeignet.

In Weiterbildung der erfindungsgemäß vorgeschlagenen Gehäusekomponente sind die Verstärkungsfasern und/oder die Verstärkungsfaserstränge der Struktur zur Lastaufnahme von einer Abdichtung, insbesondere einer aus Kunststoff gefertigten Abdichtung getrennt. Die Abdichtung erfolgt zum einen durch das Auffüllen der Hohlräume mit Kunststoffmaterial und zum anderen kann eine Abdichtung zu der gegenüberliegenden Gehäusehälfte mittels einer ringsum verlaufenden Flachdichtung oder Flüssigdichtung hergestellt werden.

Bei der erfindungsgemäß vorgeschlagenen Gehäusekomponente werden insbesondere Verstärkungsfasern und/oder Verstärkungsfaserstränge eingesetzt, die kraftschlüssig, stoffschlüssig oder formschlüssig miteinander gefügt sind. Die verstärkende Struktur mit den Fasern aus Fasern oder Fasersträngen und der Kunststoff zum Abdichten der Hohlräume werden kraftschlüssig, stoffschlüssig oder formschlüssig miteinander gefügt. Eine Variante besteht darin, die Verstärkungsstruktur mit Kunststoffmaterial zu umspritzen. Es ist andererseits jedoch auch möglich, zwei separate Teile herzustellen und diese dann miteinander zu fügen. Dieses Fügen kann auf kraftschlüssigem, stoffschlüssigem oder formschlüssigem Wege erfolgen

Die erfindungsgemäß vorgeschlagene Gehäusekomponente zeichnet sich des Weiteren dadurch aus, dass in die Struktur zur Lastaufnahme Funktionselemente integriert sind. In vorteilhafter Weise können die Funktionselemente beispielsweise beim Ausfüllen der Zwischenräume der Struktur zur Lastaufnahme integriert werden, so zum Beispiel während des Kunststoffspritzgießverfahrens. Als Funktionselemente lassen sich in vorteilhafter Weise mindestens eine Ölstandsanzeige, mindestens ein Magnet, mindestens ein Temperatursensor und/oder ein Feuchtesensor oder Lagesensoren, Beschleunigungssensoren, Sensoren zur Messung der Ölqualität, so zum Beispiel zur Messung des pH-Werts einsetzen.

Bei den erfindungsgemäß vorgeschlagenen Gehäusekomponenten umfassen die Einlegeteile, aus denen die Struktur zur Lastaufnahme gebildet wird, beispielsweise Buchsen, Lageraufnahmen, Einlegehülsen, Lagerschalen, Distanzhülsen oder auch Schrauben.

Die Erfindung bezieht sich darüber hinaus auf ein Verfahren zur Herstellung einer Gehäusekomponente, wobei nachfolgende Verfahrensschritte durchlaufen werden:
a) Herstellen einer Struktur zur Lastaufnahme, insbesondere einer dreidimensionalen Struktur aus Einlegeteilen, die über Verstärkungsfasern und/oder Verstärkungsfaserstränge miteinander verbunden werden,
b) Ein- oder mehrmaliges Umwickeln eines Einlegteils mit einer Verstärkungsfaser und/oder einem Verstärkungsfaserstrang,
c) Ausfüllen von Zwischenräumen der Struktur zur Lastaufnahme mit einem thermoplastischen oder duroplastischen Kunststoffmaterial im Spritzgießverfah ren.

In einem weiteren Verfahrensschritt können beispielsweise während des Verfahrensschritts c) in die Zwischenräume der Struktur zur Lastaufnahme Funktionselemente, wie zum Beispiel eine Ölstandsanzeige, Magnete, Temperatursensoren und/oder Feuchtesensoren integriert werden. Dazu sind bei der Anwendung des erfindungsgemäß vorgeschlagenen Verfahrens keine gesonderten Montage- beziehungsweise Fertigungsschritte erforderlich.

Weiterhin bezieht sich die erfindungsgemäß vorgeschlagene Lösung auf die Verwendung der Gehäusekomponenten an Baueinheiten, insbesondere einem Gehäuse eines Getriebes oder einem Gehäuse einer elektrischen Maschine eines elektrisch angetriebenen Fahrzeugs.

### Vorteile der Erfindung

Durch die erfindungsgemäß vorgeschlagene Lösung kann eine erhebliche Reduzierung des Gesamtgewichts der Komponenten eines elektrifizierten Antriebsstrangs für ein elektrisch angetriebenes Fahrzeug erreicht werden. Dadurch kann zum einen die Reichweite von Elektrofahrzeugen vergrößert werden, zum anderen kann aufgrund der Gewichtsreduktion eine Verkleinerung der Batterie erfolgen. Dadurch wiederum lassen sich Materialkosten und Ressourcen, insbesondere der Einsatz seltener Erden verringern. In der Gehäusekomponente selbst tragen das Einbringen der Verstärkungsfasern beziehungsweise der Verstärkungsfaserstränge in den mechanisch hochbelasteten Bereichen der Gehäusekomponente dazu bei, dass nur Material an denjenigen Stellen eingesetzt wird, wo es auch benötigt wird. Auch dadurch ist eine Ressourcen- und damit eine Materialeinsparung gegeben. Die eingesetzten verwendeten Kunststoffmaterialien bieten aufgrund ihrer dämpfenden Eigenschaften darüber hinaus eine erhebliche Verbesserung der Akustik, da insbesondere bei hohen Drehzahlen in der elektrischen Maschine Störgeräusche entstehen können. Durch die erfindungsgemäß vorgeschlagene Lösung besteht zudem die Möglichkeit, eine Funktionsintegration während der Herstellung der Gehäusekomponenten zu realisieren. So lassen sich beispielsweise Sensoren zur Erfassung von Temperatur, Feuchtigkeit, Lage, Verformung und Beschleunigung mit in die Gehäusekomponente integrieren. Die durch derartige Funktionselemente gewonnen Daten können zur Überwachung und Regelung, zur Schadens- und zur Lebensdaueranalyse genutzt werden. Durch die Integration der Funktionselemente in die erfindungsgemäß vorgeschlagene Gehäusekomponente wird eine Kostenersparnis realisiert, da keine weiteren Bearbeitungsschritte benötigt werden, wie sie beispielsweise bei der Herstellung von Gehäusekomponenten auf dem Wege des Aluminiumdruckgussverfahrens, man denke hier an das Entgraten, beim Entformen benötigt werden.

### Kurze Beschreibung der Zeichnungen

Ausführungsformen der Erfindung werden anhand der Zeichnungen und der nachfolgenden Beschreibung näher erläutert.

Es zeigen:
- Figur 1: Eine Ansicht einer Gehäusekomponente aus Kunststoffmaterial mit beispielsweise gewickelten Verstärkungsfasern,
- Figur 2: die Struktur zur Lastaufnahme auf Einlegeteilen und Verstärkungsfasern beziehungsweise Verstärkungsfasersträngen und
- Figur 3: eine perspektivische Ansicht einer fertig mit Kunststoffmaterial umspritzten erfindungsgemäßen Gehäusekomponente.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

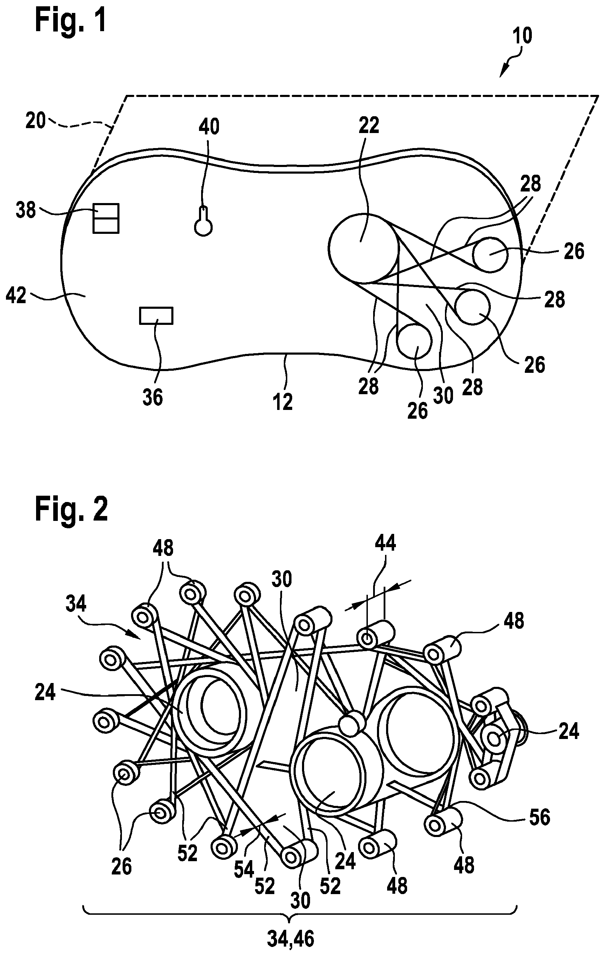

Der Darstellung gemäß Figur 1 ist eine schematische Ansicht einer erfindungsgemäß vorgeschlagenen Gehäusekomponente zu entnehmen. Wie aus Figur 1 hervorgeht, umfasst ein hier nicht näher dargestelltes Gehäuse 10 eine Gehäusekomponente 12. Bei der Gehäusekomponente 12 kann es sich um eine Gehäusekomponente 12 eines Getriebes 14 oder eines elektrischen Antriebs 16 insbesondere einer elektrischen Maschine 18 handeln. Mit Bezugszeichen 20 ist ein nicht näher dargestellter elektrifizierter Antriebsstrang eines elektrisch angetriebenen Fahrzeugs schematisch angedeutet.

Der Darstellung gemäß Figur 1 ist zu entnehmen, dass die dort schematisch skizzierte Gehäusekomponente 12 ein beispielsweise als Lageraufnahme 22 gestaltetes Einlegeteil 24 umfasst. Das Einlegeteil 24, im vorliegenden Ausführungsbeispiel gebildet durch die Lageraufnahme 22, ist durch eine Anzahl von Buchsen 26 beispielsweise umgeben. Von einer jeden der Buchsen 26 erstrecken sich Verstärkungsfasern 28 zum als Lageraufnahme 22 ausgebildeten Einlegeteil 24 der Gehäusekomponente 12. Bei den Verstärkungsfasern 28, welche das als Lageraufnahme 22 beschaffene Einlegeteil 24 umschlingen, handelt es sich beispielsweise um Verstärkungsfasern 28 oder um Verstärkungsfaserstränge 52, welche aus Kohlenstofffasern, Glasfasern, Aramidfasern oder Naturfasern hergestellt sein können. Bei den Verstärkungsfasern 28 kann es sich darüber hinaus um Faserhalbzeuge, insbesondere Tapes, imprägnierte Tapes, Rovings, imprägnierte Rovings oder TowPregs in Gestalt von vorimprägnierten Fasern handeln. Unter Rovings werden im vorliegenden Zusammenhang Stränge parallel liegender Filamente, auch als Endlosfasern bezeichnet, bezeichnet, die entweder zu einer Spule mit Außenabzug oder in einer stützfreien Packung mit Innenabzug aufgerollt sind. Im Gegensatz zu Seilen sind die einzelnen Filamente hier üblicherweise nicht miteinander verflochten, sondern nur lose zusammen gebündelt. Dadurch hat ein standardgemäßes Roving keine runde, sondern nur eine elliptische oder rechteckige Grundform. Die gängigsten für die Herstellung verwendeten Materialien sind dabei Carbonfasern, Glasfasern, Aramidfasern und Basaltfasern. Im Allgemeinen besteht ein Roving ausschließlich aus Fasern eines bestimmten Typs. Rovings stellen einen elementaren Bestandteil für die Produktion von CFK Faserverbundstoffen dar. Durch unterschiedliche Strukturen, Materialien und Eigenschaften eignen sich derartige Faserbündel für die verschiedensten Einsatzbereiche und ermöglichen eine große Breite von Herstellungsvarianten in optimaler Anpassung an die jeweiligen Anforderungen.

Wie aus der schematischen Darstellung gemäß Figur 1 hervorgeht, sind die Buchsen 26 auf einem Viertelkreis, das als Lageraufnahme 22 beschaffene Einlegeteil 24 umgebend, dargestellt. Dies kann beispielsweise einer lastpfadgerechten Verstärkung des als Lageraufnahme 22 beschaffenen Einlegeteils 24 geschuldet sein. Über die einzelnen Verstärkungsfasern 28 wird das als Lageraufnahme 22 beschaffene Einlegeteil 24 innerhalb der erfindungsgemäß vorgeschlagenen Gehäusekomponente 12 mechanisch verstärkt, so dass von der Lageraufnahme 22 ausgehende mechanische Belastungen mittels der Verstärkungsfasern 28 aufgefangen werden können und die mechanische Steifigkeit der Gehäusekomponente 12 erhalten und im Idealfall noch verbessert wird, bei gleichzeitiger Gewichtsreduktion der Gehäusekomponente 12.

In die in Figur 1 dargestellte Gehäusekomponente 12 können beispielsweise Funktionselemente wie eine Ölstandsanzeige 36, ein Magnet 38, beispielsweise ein Permanentmagnet, mindestens ein Temperatursensor 40 oder auch mindestens ein Feuchtesensor 42 integriert sein. Die aufgezählten Funktionselemente können beispielsweise in Zwischenräumen 30 (vgl. Darstellung gemäß Figur 2) untergebracht sein.

Der Darstellung gemäß Figur 2 ist eine Struktur 34 zur Lastaufnahme zu entnehmen.

Aus der Darstellung gemäß Figur 2 ergibt sich, dass die Einlegeteile 24, die als Lageraufnahme 22, als Lagerdeckel, als Buchsen 26 oder als Einlegehülsen 48 beschaffen sein können, und Verstärkungsfasern 28 beziehungsweise Verstärkungsfaserstränge 52 eine Struktur 34 zur Lastaufnahme bilden. Die Verstärkungsfasern 28 oder die Verstärkungsfaserstränge 52, die aus Kohlenstofffasern, Glasfasern, Aramidfasern, Naturfasern, aus Faserhalbzeugen, aus Tapes, aus imprägnierten Tapes, aus Rovings oder imprägnierten Rovings gefertigt sein können, umschlingen die Einlegeteile 24 entweder ein- oder mehrmals und umschlingen in einer beliebigen Windungszahl 56 beispielsweise die als Einlegehülsen 48 ausgebildeten Einlegeteile 24. Dadurch entsteht eine skelettförmige Struktur 34 zur Lastaufnahme wie sie in Figur 2 dargestellt ist. Entsprechend der jeweiligen Längserstreckung der Buchsen 26 beziehungsweise der Einlegehülsen 48 bildet sich eine Strukturtiefe 44, die über die Länge der Struktur 34 zur Lastaufnahme gesehen, durchaus variabel sein kann und sich nach der Längserstreckung, beispielsweise der Buchsen 26 oder auch der Einlegehülsen 48 richtet. Über die Verstärkungsfasern 28 beziehungsweise die Verstärkungsfaserstränge 52, die in unterschiedlichen Strangbreiten 54 ausgebildet sein können, werden die einzelnen Einlegeteile 24 der Struktur 34 zur Lastaufnahme miteinander verbunden. Gleichzeitig bilden sich zwischen den einzelnen Verstärkungsfasern 28 beziehungsweise den Verstärkungsfasersträngen 52 Zwischenräume 30 aus.

Bevorzugt erstrecken sich die Verstärkungsfasern 28 beziehungsweise die Verstärkungsfaserstränge 52 innerhalb der Struktur 34 zur Lastaufnahme entlang mechanisch besonders beanspruchter Zonen innerhalb der Gehäusekomponente 12, wie sie in Figur 1 schematisch dargestellt ist.

Die in Figur 1 dargestellten Funktionselemente, die Ölstandsanzeige 36, der Magnet 38, der Temperatursensor 40 und/oder der Feuchtesensor 42 können in den in Figur 2 dargestellten Zwischenräumen 30 der Gehäusekomponente 12 platziert werden. In vorteilhafter Weise wird zur Herstellung der kompletten Gehäusekomponente 12 nach der Erstellung der Struktur 34 zur Lastaufnahme gemäß Figur 2 das Kunststoffspritzgussverfahren eingesetzt, währenddessen die genannten Funktionsbauteile in die erwähnten Zwischenräume 30 eingelassen werden, dort ausgerichtet werden und bei der Herstellung beziehungsweise bei der Verfüllung der Zwischenräume 30 mittels Kunststoffspritzgussverfahren mit einem thermoplastischen oder duroplastischen Material in eben jene Gehäusekomponente 12 integriert werden können.

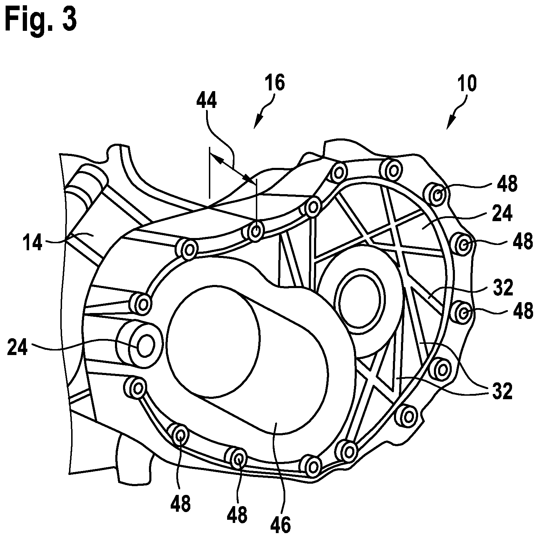

Der perspektivischen Darstellung gemäß Figur 3 ist zu entnehmen, dass es sich bei der Gehäusekomponente 12 beispielsweise um ein Deckelteil 46 handeln kann, mit welchem beispielsweise das Gehäuse 10 des Getriebes 14 seitlich abgedeckt ist. In der Darstellung gemäß Figur 3 tritt im fertigen Deckelteil 46 deutlich die Struktur 34 zur Lastaufnahme hervor. Mittels der an dieser Struktur 34 zur Lastaufnahme ausgebildeten, im Randbereich in dieses eingeflochtenen Einlegehülsen 48 lässt sich das Deckelteil 46 gemäß der perspektivischen Darstellung in Figur 3 seitlich am Gehäuse 10 beispielsweise des Getriebes 14 über Befestigungselemente 50 verschrauben. Eine Abdichtung erfolgt zum einen durch das Auffüllen der Hohlräume mit Kunststoff und zum anderen kann eine Abdichtung zu der gegenüberliegenden Gehäusehälfe mittels einer ringsum verlaufend angeordneten Flachdichtung oder Flüssigdichtung realisiert werden.

Aus der perspektivischen Darstellung gemäß Figur 3 geht hervor, dass im Deckelteil 46 die einzelnen, innerhalb der Struktur 34 zur Lastaufnahme verbliebenen Zwischenräume 30 mit dem Kunststoffmaterial verfüllt sind. Bei dem Kunststoffmaterial handelt es sich um die eingangs erwähnten Kunststoffmaterialien, wie beispielsweise Thermoplasten und Duroplasten, wie zum Beispiel Epoxidharz oder Phenolharz, Elastomere oder Polyurethane.

Der perspektivischen Darstellung des Deckelteils 46 gemäß Figur 3 lässt sich des Weiteren entnehmen, dass in dieses die Lageraufnahme 22 als Einlegeteil 24 integriert ist, ebenso wie das in Figur 2 dargestellte Deckelteil 46 ebenfalls ein Einlegeteil 24 darstellt. Im Randbereich befinden sich die einzelnen Einlegehülsen 48, welche über die Verstärkungsfasern 28 beziehungsweise die Verstärkungsfaserstränge 52, die in Figur 2 dargestellte Struktur 34 zur Lastaufnahme darstellen.

Auch der perspektivischen Darstellung gemäß Figur 3 ist zu entnehmen, dass das fertig montierte Deckelteil 46 eine Strukturtiefe 44 aufweist, die über die Längserstreckung der Gehäusekomponente 12 - hier ausgebildet als Deckelteil 46 - variabel sein kann. Die Strukturtiefe 44 der Gehäusekomponente 12 ist beispielsweise abhängig von der Länge der beispielsweise als Einlegehülsen 48 ausgebildeten Einlegeteile 24. Über hier nicht näher dargestellte Befestigungselemente 50, wie beispielsweise durch Steckschrauben, kann die fertige Gehäusekomponente 12, in Figur 3 dargestellt als Deckelteil 46, seitlich am Gehäuse 10 des Getriebes 14 montiert werden. Die einzelnen in der Struktur 34 zur Lastaufnahme gemäß Figur 2 dargestellten Verstärkungsfasern 28 beziehungsweise die dargestellten Verstärkungsfaserstränge 52 können durch Kraftschluss, Formschluss oder durch Stoffschluss miteinander verbunden sein, um die geforderte mechanische Festigkeit zu gewährleisten. Die verstärkende Struktur mit den Fasern beziehungsweise Fasersträngen und das Kunststoffmaterial werden kraftschlüssig, stoffschlüssig oder formschlüssig miteinander gefügt. Eine Variante ist dadurch gegeben, dass die Verstärkungsstruktur mit Kunststoffmaterial umspritzt wird. Des Weiteren besteht die Möglichkeit, zwei separate Teile herzustellen und diese dann miteinander zu fügen. Das Fügen kann kraftschlüssig, stoffschlüssig oder auch auf formschlüssigem Wege durchgeführt werden. Den in Figur 1 schematisch dargestellten Funktionselementen, wie Ölstandsanzeige 36, Magnet 38, Temperatursensor 40 sowie Feuchtesensor 42 können in die erfindungsgemäß vorgeschlagene Gehäusekomponente 12 weitere Funktionalitäten in Form von Lagesensoren oder Beschleunigungssensoren integriert werden.

Die erfindungsgemäß vorgeschlagene Gehäusekomponente 12 lässt sich insbesondere durch ein Verfahren herstellen, wobei zumindest die nachfolgenden Verfahrensschritte durchlaufen werden:
a) Herstellen einer Struktur 34 zur Lastaufnahme, insbesondere einer dreidimensionalen Struktur aus Einlegeteilen 24, die über Verstärkungsfasern 28 und/oder Verstärkungsfaserstränge 52 miteinander verbunden werden;
b) ein- oder mehrmaliges Umwickeln eines Einlegeteils 24 mit einer Verstärkungsfaser 28 und/oder eines Verstärkungsfaserstranges 52 und
c) Ausfüllen von Zwischenräumen 30 der Struktur 34 zur Lastaufnahme mit einem thermoplastischen oder duroplastischen Kunststoffmaterial im Spritzgießverfahren und damit einhergehendes Anordnen von Funktionselementen.

Beim erfindungsgemäß vorgeschlagenen Verfahren kann in vorteilhafter Weise im finalen Fertigungsschritt, d. h. beim Verfüllen der Zwischenräume 30 der Struktur 34 zur Lastaufnahme zumindest eine Ölstandsanzeige 36, zumindest ein Magnet 38, zumindest ein Temperatursensor 40 sowie zumindest ein Feuchtesensor 42 beziehungsweise zusätzlich Lagesensoren und Beschleunigungssensoren unmittelbar beim Herstellen der Gehäusekomponente 12 integriert werden. Damit entfällt in vorteilhafter Weise eine Nachbearbeitung der Gehäusekomponenten, beispielsweise das beim Aluminiumdruckgussverfahren erforderliche Entgraten, vollständig.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Gehäusekomponente (12) einer Baueinheit, insbesondere eines Gehäuses (10) eines Getriebes (14) oder einer elektrischen Maschine (18) im elektrischen Antriebsstrang (20) eines Fahrzeugs, **dadurch gekennzeichnet, dass** die Gehäusekomponente (12) mindestens eine integrierte Lageraufnahme (22) enthält, der mindestens ein Einlegeteil (24) zur mechanischen Fixierung zugeordnet ist, die lastpfadgerecht mit Verstärkungsfasern (28) und/oder Verstärkungsfasersträngen (52) verbunden ist.

2. Gehäusekomponente (12) gemäß Anspruch 1, **dadurch gekennzeichnet, dass** die Verstärkungsfasern (28) und/oder die Verstärkungsfaserstränge (52) als anorganische Verstärkungsfasern (Kohlenstoff-, Glas-, Basalt-, Bor-, Keramik-, Quarz-, Kieselsäurefasern und/oder metallische Verstärkungsfasern (Stahlfasern), organische Verstärkungsfasern (Aramid-,- Polyester-, Nylon-, Polyethylen-, Polymethylmethacrylat-, PBO-Fasern) oder Naturfasern (Hanf-,- Flachs-, Sisal-, Holzfasern) ausgeführt sind.

3. Gehäusekomponente (12) gemäß Anspruch 1, **dadurch gekennzeichnet, dass** die Verstärkungsfasern (28) und/oder die Verstärkungsfaserstränge (52) als Faserhalbzeuge, insbesondere als Tapes, imprägnierte Tapes, Rovings oder imprägnierte Rovings ausgeführt sind.

4. Gehäusekomponente (12) gemäß den Ansprüchen 1 bis 3, **dadurch gekennzeichnet, dass** die durch lastpfadgerecht verlaufende Verstärkungsfasern (28) und/oder Verstärkungsfaserstränge (52) verbundenen Einlegeteile (24) eine Struktur (34) zur Lastaufnahme bilden, welche Zwischenräume (30) aufweist.

5. Gehäusekomponente (12) gemäß den Ansprüchen 1 bis 4, **dadurch gekennzeichnet, dass** die Zwischenräume (30) mit einem Kunststoffmaterial, insbesondere einem Thermoplasten oder einem Duroplasten verfüllt sind.

6. Gehäusekomponente (12) gemäß Anspruch 5, **dadurch gekennzeichnet, dass** als Thermoplaste Polyamide, Polyethylen, Polypropylen, Polycarbonat, Polyvinylchlorid eingesetzt werden.

7. Gehäusekomponente (12) gemäß Anspruch 5, **dadurch gekennzeichnet, dass** als Duroplaste Epoxidharz oder Phenolharz, oder Elastomere oder Polyurethan eingesetzt werden.

8. Gehäusekomponente (12) gemäß den Ansprüchen 1 bis 7, **dadurch gekennzeichnet, dass** die Verstärkungsfasern (28) und/oder die Verstärkungsfaserstränge (52) der Struktur (34) zur Lastaufnahme durch eine Abdichtung getrennt sind, wobei die Abdichtung durch ein Verfüllen von Hohlräumen mit Kunststoffmaterial oder durch eine flachverlaufende Dichtung oder eine Flüssigkeitsdichtung gegeben ist.

9. Gehäusekomponente (12) gemäß den Ansprüchen 1 bis 8, **dadurch gekennzeichnet, dass** die Verstärkungsfasern (28) und/oder die Verstärkungsfaserstränge (52) mit der Gehäusekomponente (12) oder Teilen der Gehäusekomponente (12) kraftschlüssig oder formschlüssig gefügt sind.

10. Gehäusekomponente (12) gemäß den Ansprüchen 1 bis 9, **dadurch gekennzeichnet, dass** in die Struktur (34) zur Lastaufnahme Funktionselemente integriert sind.

11. Gehäusekomponente (12) gemäß Anspruch 10, **dadurch gekennzeichnet, dass** die Funktionselemente mindestens eine Ölstandsanzeige (36), mindestens einen Magneten (38), mindestens einen Temperatursensor (40), mindestens einen Feuchtesensor (12) oder mindestens einen Lagesensor, mindestens einen Beschleunigungssensor, Sensoren zur Messung der Ölqualität, insbesondere pH-Wert-messende Sensoren umfassen.

12. Gehäusekomponente (12) gemäß den Ansprüchen 1 bis 11, **dadurch gekennzeichnet, dass** die Einlegeteile (24) Buchsen (26), Lageraufnahmen (22) oder Einlegehülsen (48) umfassen.

13. Verfahren zur Herstellung einer Gehäusekomponente (12) gemäß einem der Ansprüche 1 bis 12 mit nachfolgenden Verfahrensschritten:
a) Herstellen einer Struktur (34) zur Lastaufnahme, insbesondere einer dreidimensionalen Struktur aus Einlegeteilen (24), die über Verstärkungsfasern (28) und/oder Verstärkungsfaserstränge (52) miteinander verbunden werden;
b) Ein- oder mehrmaliges Umwickeln eines Einlegeteils (24) mit einer Verstärkungsfaser (28) und/oder einem Verstärkungsfaserstrang (52) und
c) Ausfüllen von Zwischenräumen (30) der Struktur (34) zur Lastaufnahme mit einem thermoplastischen oder duroplastischen Kunststoffmaterial im Spritzgießverfahren.

14. Verwendung der Gehäusekomponente (12) gemäß einem der Ansprüche 1 bis 12 an einer Baueinheit, insbesondere einem Gehäuse (10) eines Getriebes (14) oder einer elektrischen Maschine (18) eines elektrisch angetriebenen Fahrzeugs.
